# FASCICULE DE BREVET EUROPEEN

(11) **EP 3 191 878 B1**
(45) Date de publication et mention de la délivrance du brevet: **26.12.2018**
(21) Numéro de dépôt: 15753110.4
(22) Date de dépôt: 16.07.2015
(51) Int. Cl.: G02B 5/02, F21V 8/00

(54) **DISPOSITIF LUMINEUX**
BELEUCHTUNGSVORRICHTUNG
LIGHTING DEVICE

(30) Priorité: 16.07.2014 FR 1401583
(43) Date de publication de la demande: 19.07.2017
(73) Titulaire: Valeo Systèmes Thermiques, 78320 Le Mesnil-Saint-Denis (FR)
(72) Inventeur: THORAILLER, Maryline, F-78320 Le Mesnil Saint Denis (FR); BOMBARD, Stéphane, F-78320 Le Mesnil Saint Denis (FR)
(74) Mandataire: Delplanque, Arnaud
(86) Numéro de dépôt international: PCT/FR2015/051958
(87) Numéro de publication internationale: WO 2016/009156

(56) Documents cités:
- DE-A1- 4 324 037
- KR-A- 20120 132 367

## Description

La présente invention concerne un dispositif lumineux, notamment pour véhicule automobile. L'invention se rapporte également à un dôme module d'un véhicule automobile comprenant un dispositif lumineux selon l'invention.

Le nombre de dispositifs lumineux présents dans l'habitacle des véhicules automobiles augmente avec la sophistication de ces derniers.

Les sources d'éclairage les plus couramment utilisées sont typiquement des diodes électroluminescentes qui sont monochromatiques avec des variétés de couleurs disponibles assez limitées. Il existe des diodes électroluminescentes polychromatiques, mais elles sont généralement très onéreuses et offrent peu de choix en termes de puissance.

Il existe des dispositifs permettant à partir d'une pluralité de sources de lumière de couleurs différentes de mélanger les faisceaux issus de ces sources pour essayer d'obtenir un faisceau ayant la couleur souhaitée.

Ces dispositifs utilisent des lames semi réfléchissantes afin de mélanger les faisceaux issus de chaque source lumineuse. Ce type de dispositif présente une fragilité et un encombrement qui peut être incompatible avec une utilisation comme témoin lumineux dans un véhicule automobile.

Finalement, les faisceaux obtenus avec ces types de dispositifs sont généralement inhomogènes. Une autre solution technologique est divulguée dans le document KR 10-2012-0132367.

Ainsi, il existe un besoin pour fournir un dispositif lumineux permettant un mélange homogène d'au moins deux faisceaux lumineux dont les dimensions et la solidité seraient compatibles avec une utilisation comme témoin lumineux dans un véhicule automobile.

A cet effet, l'invention comprend un dispositif lumineux comprenant :
- au moins deux sources de lumière de couleur différente,
- un guide de lumière comprenant une face d'entrée et une face de sortie et configuré pour transmettre les rayons lumineux issus des au moins deux sources de lumière de sa face d'entrée vers sa face de sortie, dans lequel les, au moins deux, sources de lumière sont disposées les unes à côté des autres et dans lequel le guide de lumière comprend une pluralité de microstructures de forme pointue réparties sur sa face d'entrée.

Les microstructures de forme pointues permettent de disperser les rayons lumineux incidents dans différentes directions de manière à produire un mélange relativement homogène des rayons issus des deux sources de lumière au niveau de la face de sortie du guide. De plus, les formes pointues permettent de minimiser le nombre de rayons lumineux reflétés au niveau de la surface d'entrée.

Selon un autre aspect de la présente invention, la pointe des microstructures de la face d'entrée est orientée perpendiculairement à l'orientation générale de la face d'entrée

Selon un aspect supplémentaire de la présente invention la pointe des microstructures de la face d'entrée est orientée vers les sources de lumière.

Cette disposition permet d'obtenir des angles de réflexion très différents dans une zone restreinte quelle que soit l'angle d'incidence des rayons lumineux.

Selon un aspect supplémentaire de la présente invention, les microstructures de la face d'entrée du guide de lumière sont adjacentes les unes par rapport aux autres.

Une telle disposition permet d'optimiser l'effet des microstructures.

Selon un aspect additionnel de la présente invention, les microstructures sont identiques et forment un réseau.

Une telle disposition permet de simplifier la fabrication du guide de lumière.

Selon un autre aspect de la présente invention, le rapport entre la largeur des bases des microstructures de la face d'entrée du guide de lumière et la distance entre les sources de lumière et la face d'entrée du guide de lumière est inférieur ou égal à 0,07.

Un tel rapport permet de limiter l'angle d'ouverture à 4° de manière à limiter la différence d'incidence des rayons issus des différentes sources lumineuses.

Selon un aspect supplémentaire de la présente invention, la distance entre les sources de lumière et la face d'entrée du guide de lumière est comprise entre 2 et 4 mm.

Selon un aspect additionnel de la présente invention, les microstructures de la face d'entrée du guide de lumière ont une forme pyramidale.

Selon un autre aspect de la présente invention, les microstructures de la face d'entrée du guide de lumière ont une forme tétraédrique.

Selon un aspect supplémentaire de la présente invention, les microstructures de la face d'entrée du guide de lumière ont une forme conique.

Selon un aspect additionnel de la présente invention, au moins une lentille est placée sur la face de sortie de manière à orienter le faisceau lumineux issu du guide de lumière.

Selon un autre aspect de la présente invention, les, au moins deux, sources de lumière sont regroupées dans une diode électroluminescente multi-chips.

L'utilisation d'une diode électroluminescente multi-chips permet de réduire la taille des sources lumineuses et de réduire l'espacement entre les différentes sources lumineuses.

Selon un aspect supplémentaire de la présente invention, la diode électroluminescente multi-chips comprend trois puces émettant respectivement les couleurs rouge vert et bleue.

Une telle diode permet d'obtenir une lumière blanche à la sortie du guide de lumière.

La présente invention concerne également un dôme module d'un véhicule automobile comprenant un dispositif lumineux.

L'invention sera mieux comprise à la lumière de la description suivante qui n'est donnée qu'à titre indicatif et qui n'a pas pour but de la limiter, accompagnée des figures ci-jointes:
- la figure 1 illustre de façon schématique, une vue de côté d'un dispositif lumineux selon l'invention, le dispositif lumineux étant représenté avec des trajets de rayons lumineux ;
- la figure 2 illustre de façon schématique une vue en trois dimensions d'un guide de lumière selon l'invention ;
- la figure 3 représente de façon schématique une vue de face de la face d'entrée d'un guide de lumière selon l'invention ;
- la figure 4 représente de façon schématique une vue en trois dimensions de la face d'entrée d'un guide de lumière selon l'invention ;

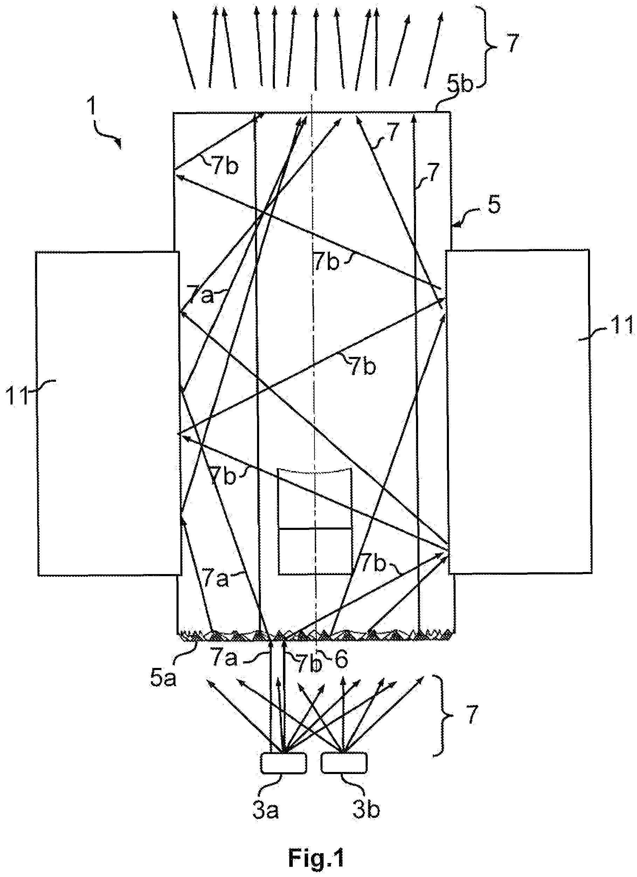

Selon le mode de réalisation représenté sur la figure 1, l'invention concerne un dispositif lumineux 1 comprenant deux sources de lumière ou sources lumineuses 3a et 3b et un guide de lumière 5 configuré pour transmettre les rayons lumineux représentés ici par des flèches 7 de sa face d'entrée 5a située en regard des deux sources lumineuses 3a et 3b à sa face de sortie 5b située à l'extrémité opposée à la face d'entrée 5a.

Dans l'exemple de la figure 1, le guide de lumière 5 est de forme rectiligne, par exemple cylindrique, cependant la présente invention ne se limite pas à un guide de lumière 5 rectiligne ou à un guide de lumière 5 de section circulaire mais s'étend également à des guides de lumière 5 de section polygonale ou à des guides de lumière non rectilignes, par exemple courbés ou souples.

Le guide de lumière 5 peut également comporter des ailettes latérales 11 destinées à sa fixation et qui peuvent être faites de matière avec le guide de lumière 5 .

Les deux sources de lumière 3a et 3b sont positionnées l'une à côté de l'autre, par exemple de manière adjacente ou proche l'une de l'autre et proche de l'axe 6 du guide de lumière 5 de manière à maximiser le nombre de rayons lumineux 7 transmis vers la face d'entrée 5a du guide de lumière 5. Les deux sources de lumière 3a et 3b sont également de couleurs différentes, c'est-à-dire que les longueurs d'onde des rayons lumineux qu'elles émettent sont différentes.

Selon un mode de réalisation de la présente invention, ces longueurs d'onde sont distinctes et correspondent à un intervalle prédéfini du spectre visible comme par exemple l'intervalle 380 à 450 nm pour la couleur violette ou l'intervalle 620 à 670 nm pour la couleur rouge.

Par ailleurs, la présente invention ne se limite pas à deux sources de lumière 3a et 3b mais s'étend également à un plus grand nombre de sources de lumière, le nombre de sources de lumière étant de préférence limité par la taille de la face d'entrée 5a du guide de lumière 5 et la taille des sources de lumière pour que les rayons lumineux issus des sources de lumière soient transmis par le guide de lumière 5. Avantageusement les sources lumineuses sont disposées de manière centrée par rapport à la face d'entrée 5a.

Les sources de lumière 3a et 3b sont par exemple des diodes électroluminescentes et peuvent être positionnées sur un substrat commun. De plus, selon un mode de réalisation de la présente invention, pour réduire leurs tailles, les sources de lumière 3a et 3b sont regroupées dans une diode électroluminescente multi-chips émettant des rayons lumineux de différentes couleurs, par exemple rouge, vert et bleu. En effet, dans le cas où l'on veut récupérer une lumière blanche en sortie du guide de lumière 5, l'utilisation de trois sources de lumière de couleur rouge, verte et bleue permet d'obtenir une lumière relativement blanche lorsque l'on mixe les trois rayonnements correspondants.

Le guide de lumière 5 est réalisé en matériau transparent, par exemple en matériau plastique clair sans diffusion comme par exemple du polycarbonate cristal ou avec une légère diffusion comme par exemple du polycarbonate légèrement laiteux. Le guide de lumière 5 présente une forme générale allongée, rectiligne dans le cas de la figure 1, et comprend une face d'entrée 5a à une première extrémité et une face de sortie 5b à son extrémité opposée.

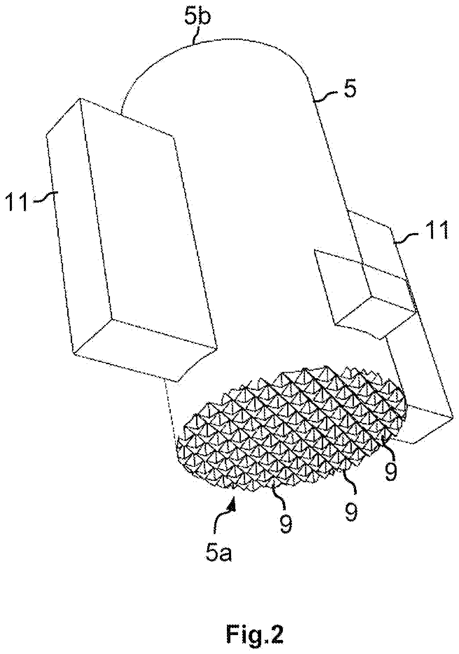

Comme représenté sur la figure 2, la face d'entrée 5a comprend une pluralité de microstructures 9 de forme pointue dont les pointes sont orientées perpendiculairement à l'orientation générale de la face d'entrée 5a et sont dirigées vers l'extérieur du guide de lumière 5, c'est à dire vers les sources de lumière 3a et 3b (non représentées sur la figure 2). Ces microstructures 9 permettent de diffuser les rayons lumineux 7 incidents dans des directions très différentes et très variées quel que soit leur angle d'incidence. En effet, deux rayons arrivant perpendiculairement à l'orientation générale de la face d'entrée comme par exemple les rayons 7a et 7b de la figure 1 pourront être réfractés dans des directions totalement différentes par la face d'entrée 5a en fonction de l'orientation de la portion de microstructure 9 sur laquelle ils sont réfractés de sorte que leur trajet au sein du guide de lumière 5 pourra être très différent et leur position sur la face de sortie 5b pourra également être très différente.

Les microstructures 9 peuvent être de forme pyramidale ou tétraédrique, le nombre de faces de la microstructure pouvant être supérieur ou égal à quatre ou également de forme conique.

De préférence, les microstructures sont positionnées de façon adjacente, c'est-à-dire qu'elles présentent une portion de leur base commune avec au moins une autre microstructure 9. Les microstructures 9 adjacentes ont par exemple une arête commune dans le cas de microstructures 9 pyramidales ou tétraédrique et leur base tronquée de sorte à présenter une arête commune dans le cas de microstructures coniques. Cette configuration permet de ne pas avoir de surfaces planes entre les microstructures.

De manière à faciliter la fabrication de la face d'entrée 5a du guide de lumière, les microstructures 9 auront de préférence la même taille et la même hauteur, cependant des tailles de microstructures légèrement différente peuvent également permettre d'obtenir le résultat recherché.

Selon le mode de réalisation représenté sur la figure 2, les microstructures 9 sont identiques et sont réparties de manière adjacente et régulière sur la face d'entrée et forment donc un réseau de microstructures 9.

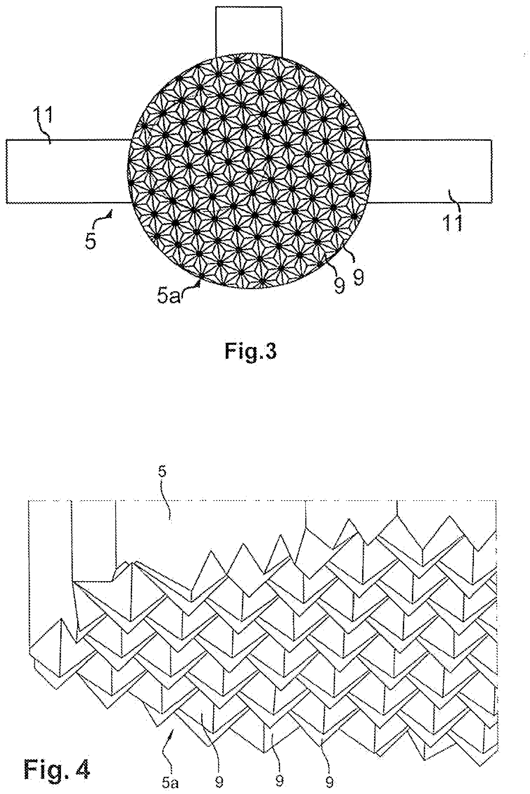

Les figures 3 et 4 représentent de façon détaillée un exemple de face d'entrée comprenant un réseau de microstructures 9 de forme tétraédrique en coin de cube.

Ces microstructures 9 sont par exemple obtenues par découpe laser ou injection plastique.

Ainsi, les microstructures 9 permettent de réfracter les rayons lumineux 7 incidents dans des directions diverses très différentes en fonction de l'orientation de la portion de microstructure 9 sur laquelle un rayon lumineux 7 arrive ce qui permet de répartir les rayons lumineux 7 issus des différentes sources de lumière sur l'ensemble de la face de sortie 5b du guide de lumière et ainsi de réaliser un mélange des rayons lumineux 7 issus des différentes sources de lumière 3a, 3b.

Une ou plusieurs lentilles peuvent également être placées au niveau de la face de sortie 5b du guide de lumière 5 pour orienter le faisceau lumineux, par exemple pour le focaliser dans une direction précise ou au contraire pour le diffuser sur une zone élargie. Ces lentilles sont par exemple des lentilles de Fresnel.

Par ailleurs, afin de limiter la quantité de rayons lumineux 7 réfléchis au niveau de la face d'entrée 5a, l'angle d'ouverture des microstructures 9 doit rester faible. Ainsi, la taille des microstructures 9 et l'espacement entre les sources de lumière 3a, 3b et la face d'entrée 5a du guide de lumière 5 seront choisis de sorte que le rapport entre la largeur des bases des microstructures 9 de la face d'entrée 5a du guide de lumière 5 et la distance entre les sources de lumière 3a, 3b et la face d'entrée 5a du guide de lumière 5 est inférieur ou égal à 0,07.

Ainsi, l'angle d'ouverture reste inférieur à 4°. Cet angle ne doit pas non plus être trop petit pour permettre une bonne répartition des rayons lumineux 7 issus des différentes sources de lumière 3a et 3b sur la face d'entrée du guide de lumière 5. La hauteur des microstructures 9 sera par exemple comprise entre 0,2 et 0,4 mm tandis que la distance entre les sources de lumière 3a, 3b et la face d'entrée 5a pourra être comprise entre 2 et 4 mm. Le diamètre du guide de lumière 5 est par exemple compris entre 2 et 4 mm.

La pointe de la microstructure permet de dévier la direction lumineuse la plus intense de chacune des leds. Ainsi, cette forme pointue permet de dévier le pic central d'intensité lumineuse de chacune des leds. De préférence, l'angle de la pointe de la microstructure est inférieur ou égal à 90 degrés pour obtenir le plus grand nombre possible de rayons déviés et ainsi mélangés.

Ainsi, du fait de la structure particulière de la face d'entrée 5a du guide de lumière 5, les rayons lumineux 7 issus d'une source de lumière 3a, 3b sont répartis sur l'ensemble de la face de sortie 5b du guide de lumière 5 de manière relativement homogène. L'utilisation de plusieurs sources de lumière 3a, 3b permet donc d'obtenir une superposition des rayons lumineux 7 issus des différentes sources de lumière 3a, 3b sur l'ensemble de la face de sortie 5b. Ces sources de lumière 3a, 3b ayant des couleurs différentes, le faisceau de lumière obtenu à la sortie du guide de lumière 5 correspond à un faisceau dont la couleur correspond à la superposition des couleurs des sources de lumière 3a, 3b. Ainsi, en sélectionnant les couleurs des sources de lumière 3a, 3b, on peut obtenir un faisceau lumineux de la teinte désirée. L'utilisation de trois sources de lumière rouge, verte et bleue permet ainsi d'obtenir un faisceau de lumière blanche relativement homogène. Ce faisceau peut alors être utilisé pour éclairer un élément particulier. Par exemple, dans le cas d'un véhicule automobile, le dispositif lumineux décrit précédemment peut être installé dans un dôme module situé au-dessus de la console centrale pour éclairer la console centrale ou un élément particulier de la console centrale.

## Revendications

1. Dispositif lumineux (1) comprenant :
- au moins deux sources de lumière (3a, 3b) de couleur différente,
- un guide de lumière (5) comprenant une face d'entrée (5a) et une face de sortie (5b) et configuré pour transmettre les rayons lumineux (7) issus des au moins deux sources de lumière (3a, 3b) de sa face d'entrée (5a) vers sa face de sortie (5b),
**caractérisé en ce que**
les, au moins deux, sources de lumière (3a , 3b) sont disposées les unes à côté des autres et **en ce que** le guide de lumière (5) comprend une pluralité de microstructures (9) de forme pointue réparties sur sa face d'entrée (5a), la pointe des microstructures (9) de la face d'entrée (5a) étant orientée perpendiculairement à l'orientation générale de la face d'entrée (5a)

2. Dispositif lumineux selon la revendication 1 dans lequel la pointe des microstructures (9) de la face d'entrée (5a) est orientée vers les sources de lumière (3a, 3b).

3. Dispositif lumineux (1) selon l'une des revendications précédentes, dans lequel les microstructures (9) de la face d'entrée (5a) du guide de lumière (5) sont adjacentes les unes par rapport aux autres.

4. Dispositif lumineux (1) selon l'une des revendications précédentes, dans lequel les microstructures (9) sont identiques et forment un réseau.

5. Dispositif lumineux (1) selon l'une des revendications précédentes, dans lequel le rapport entre la largeur des bases des microstructures (9) de la face d'entrée (5a) du guide de lumière (5) et la distance entre les sources de lumière (3a, 3b) et la face d'entrée (5a) du guide de lumière (5) est inférieur ou égal à 0,07.

6. Dispositif lumineux (1) selon la revendication 5, dans lequel la distance entre les sources de lumière (3a, 3b) et la face d'entrée du guide de lumière (5) est comprise entre 2 et 4 mm.

7. Dispositif lumineux (1) selon l'une quelconque des revendications précédentes, dans lequel les microstructures (9) de la face d'entrée (5a) du guide de lumière (5) ont une forme pyramidale.

8. Dispositif lumineux (1) selon l'une quelconque des revendications 1 à 6, dans lequel les microstructures (9) de la face d'entrée (5a) du guide de lumière (5) ont une forme tétraédrique.

9. Dispositif lumineux (1) selon l'une quelconque des revendications 1 à 6, dans lequel les microstructures (9) de la face d'entrée (5a) du guide de lumière (5) ont une forme conique.

10. Dispositif lumineux (1) selon l'une des revendications précédentes dans lequel au moins une lentille est placée sur la face de sortie (5b) de manière à orienter le faisceau lumineux issu du guide de lumière (5).

11. Dispositif lumineux (1) selon l'une des revendications précédentes, dans lequel les, au moins deux, sources de lumière (3a, 3b) sont regroupées dans une diode électroluminescente multi-chips.

12. Dispositif lumineux (1) selon la revendication 11 dans lequel la diode électroluminescente multi-chips comprend trois puces émettant respectivement les couleurs rouge, verte et bleue.

13. Dôme module d'un véhicule automobile comprenant un dispositif lumineux (1) selon l'une quelconque des revendications 1 à 12.

## Patentansprüche

1. Leuchtvorrichtung (1), welche umfasst:
- wenigstens zwei Lichtquellen (3a, 3b) von unterschiedlicher Farbe,
- einen Lichtleiter (5), der eine Eintrittsfläche (5a) und eine Austrittsfläche (5b) umfasst und dafür ausgelegt ist, die Lichtstrahlen (7), die von den wenigstens zwei Lichtquellen (3a, 3b) ausgehen, von seiner Eintrittsfläche (5a) zu seiner Austrittsfläche (5b) zu übertragen,
**dadurch gekennzeichnet, dass**
die wenigstens zwei Lichtquellen (3a, 3b) nebeneinander angeordnet sind, und dadurch, dass der Lichtleiter (5) mehrere Mikrostrukturen (9) von spitz zulaufender Form umfasst, die auf seiner Eintrittsfläche (5a) verteilt sind, wobei die Spitzen der Mikrostrukturen (9) der Eintrittsfläche (5a) senkrecht zur allgemeinen Ausrichtung der Eintrittsfläche (5a) ausgerichtet sind.

2. Leuchtvorrichtung nach Anspruch 1, wobei die Spitze der Mikrostrukturen (9) der Eintrittsfläche (5a) zu den Lichtquellen (3a, 3b) hin ausgerichtet ist.

3. Leuchtvorrichtung (1) nach einem der vorhergehenden Ansprüche, wobei die Mikrostrukturen (9) der Eintrittsfläche (5a) des Lichtleiters (5) einander benachbart sind.

4. Leuchtvorrichtung (1) nach einem der vorhergehenden Ansprüche, wobei die Mikrostrukturen (9) identisch sind und ein Netz bilden.

5. Leuchtvorrichtung (1) nach einem der vorhergehenden Ansprüche, wobei das Verhältnis zwischen der Breite der Grundflächen der Mikrostrukturen (9) der Eintrittsfläche (5a) des Lichtleiters (5) und dem Abstand zwischen den Lichtquellen (3a, 3b) und der Eintrittsfläche (5a) des Lichtleiters (5) kleiner oder gleich 0,07 ist.

6. Leuchtvorrichtung (1) nach Anspruch 5, wobei der Abstand zwischen den Lichtquellen (3a, 3b) und der Eintrittsfläche (5a) des Lichtleiters (5) zwischen 2 und 4 mm liegt.

7. Leuchtvorrichtung (1) nach einem der vorhergehenden Ansprüche, wobei die Mikrostrukturen (9) der Eintrittsfläche (5a) des Lichtleiters (5) eine Pyramidenform aufweisen.

8. Leuchtvorrichtung (1) nach einem der Ansprüche 1 bis 6, wobei die Mikrostrukturen (9) der Eintrittsfläche (5a) des Lichtleiters (5) eine Tetraederform aufweisen.

9. Leuchtvorrichtung (1) nach einem der Ansprüche 1 bis 6, wobei die Mikrostrukturen (9) der Eintrittsfläche (5a) des Lichtleiters (5) eine konische Form aufweisen.

10. Leuchtvorrichtung (1) nach einem der vorhergehenden Ansprüche, wobei wenigstens eine Linse auf der Austrittsseite (5b) angeordnet ist, um das von dem Lichtleiter (5) ausgehende Lichtbündel auszurichten.

11. Leuchtvorrichtung (1) nach einem der vorhergehenden Ansprüche, wobei die wenigstens zwei Lichtquellen (3a, 3b) in einer Multi-Chip-Leuchtdiode gruppiert sind.

12. Leuchtvorrichtung (1) nach Anspruch 11, wobei die Multi-Chip-Leuchtdiode drei Chips umfasst, die Licht von toter, grüner bzw. blauer Farbe aussenden.

13. Deckenmodul eines Kraftfahrzeugs, welches eine Leuchtvorrichtung (1) nach einem der Ansprüche 1 bis 12 umfasst.

## Claims

1. Luminous device (1) comprising:
- at least two light sources (3a, 3b) of different colour,
- a light guide (5) comprising an entrance face (5a) and an exit face (5b) and configured to transmit the light rays (7) output by the at least two light sources (3a, 3b) from its entrance face (5a) to its exit face (5b),
**characterized in that**
the at least two light sources (3a, 3b) are placed beside one another and **in that** the light guide (5) comprises a plurality of microstructures (9) of pointed shape that are distributed over its entrance face (5a), the tip of the microstructures (9) of the entrance face (5a) being oriented perpendicularly to the general orientation of the entrance face (5a).

2. Luminous device according to Claim 1, wherein the tip of the microstructures (9) of the entrance face (5a) is oriented toward the light sources (3a, 3b).

3. Luminous device (1) according to either of the preceding claims, wherein the microstructures (9) of the entrance face (5a) of the light guide (5) are adjacent to one another.

4. Luminous device (1) according to one of the preceding claims, wherein the microstructures (9) are identical and form an array.

5. Luminous device (1) according to one of the preceding claims, wherein the ratio between the width of the bases of the microstructures (9) of the entrance face (5a) of the light guide (5) and the distance between the light sources (3a, 3b) and the entrance face (5a) of the light guide (5) is lower than or equal to 0.07.

6. Luminous device (1) according to Claim 5, wherein the distance between the light sources (3a, 3b) and the entrance face of the light guide (5) is comprised between 2 and 4 mm.

7. Luminous device (1) according to any one of the preceding claims, wherein the microstructures (9) of the entrance face (5a) of the light guide (5) have a pyramidal shape.

8. Luminous device (1) according to any one of Claims 1 to 6, wherein the microstructures (9) of the entrance face (5a) of the light guide (5) have a tetrahedral shape.

9. Luminous device (1) according to any one of Claims 1 to 6, wherein the microstructures (9) of the entrance face (5a) of the light guide (5) have a conical shape.

10. Luminous device (1) according to one of the preceding claims, wherein at least one lens is placed on the exit face (5b) so as to orient the light beam output by the light guide (5).

11. Luminous device (1) according to one of the preceding claims, wherein the at least two light sources (3a, 3b) are grouped together in a multi-chip light-emitting diode.

12. Luminous device (1) according to Claim 11, wherein the multi-chip light-emitting diode comprises three chips emitting the colours red, green and blue, respectively.

13. Dome module for a motor vehicle comprising a luminous device (1) according to any one of Claims 1 to 12.
